# FASCICULE DE BREVET EUROPEEN

(11) **EP 2 377 808 B1**
(45) Date de publication et mention de la délivrance du brevet: **31.10.2012**
(21) Numéro de dépôt: 11156929.9
(22) Date de dépôt: 04.03.2011
(51) Int. Cl.: B67D 7/32, B67D 7/84, F16L 3/223, H02G 3/22

(54) **Distributeur de carburant équipé d'un dispositif de protection anti-explosion ainsi que procédé de montage d'un tel distributeur de carburant**
Kraftstoffzapfanlage mit einer explosionshemmenden Vorrichtung und Verfahren zum Aufbau einer solchen Kraftstoffzapfanlage
Fuel dispenser with explosion-inhibiting system and method for installing such a fuel dispenser

(30) Priorité: 19.04.2010 FR 1052958
(43) Date de publication de la demande: 19.10.2011
(73) Titulaire: Tokheim Holding B.V., 5531 AD Bladel (NL)
(72) Inventeur: Gardien, Philippe, 14390, CABOURG (FR); Jules, Alexis, 14170, Olendon (FR)
(74) Mandataire: Cabinet HERRBURGER

(56) Documents cités:
- EP-A1- 1 333 007
- EP-A1- 1 995 210
- US-A- 5 911 248

## Description

La présente invention concerne un distributeur de carburant liquide.

Un tel dispositif comporte classiquement un compartiment inférieur ou compartiment hydraulique en règle générale fixé à même le sol et un compartiment supérieur ou compartiment électronique.

Le carburant à distribuer qui est transféré d'un réservoir de stockage jusqu'à un tuyau flexible équipé d'un pistolet distributeur passe au travers d'équipements hydrauliques (canalisations, pompe, mesureur, dispositif de récupération de vapeurs ...) qui sont montés à la partie interne du compartiment hydraulique.

Le compartiment électronique est quant à lui classiquement équipé, à sa partie interne d'équipements électroniques correspondant à des cartes électroniques, processeurs et mémoires qui ont pour fonction de permettre un bonne gestion des transactions (paiement, entrée d'un volume désiré, calcul du volume délivré, compensation en température, écran d'information ...)

Les équipements hydrauliques sont reliés électriquement par des câbles aux équipements électroniques de manière à commander ces transactions.

Les normes et réglementations en vigueur imposent que le compartiment hydraulique et le compartiment électronique soient isolés l'un de l'autre vis-à-vis des vapeurs de carburant pour réduire les risques d'incendie et d'explosion.

En effet, le mélange air/vapeurs de carburant est très fortement explosif, et la moindre étincelle provenant des câbles électriques et équipements électroniques peut enflammer ce mélange.

Or, le maintien d'une telle étanchéité est problématique au niveau du passage des câbles qui relient les équipements du compartiment hydraulique aux équipements du compartiment électronique.

Il est par suite nécessaire, pour respecter les normes et réglementations en vigueur de prévoir à ce niveau des dispositifs formant barrière de protection anti-explosion de nature à empêcher que les vapeurs de carburant s'évaporant dans le compartiment hydraulique puissent remonter dans le compartiment électronique.

A cet effet, on utilise classiquement des joints à presse-étoupes pour assurer le passage des câbles entre le compartiment hydraulique et le compartiment électronique.

De tels joints présentent toutefois l'inconvénient d'être relativement coûteux et peu pratiques que ce soit pour l'installation des câbles ou en cas d'opération de maintenance sur l'un de ces câbles

Pour garantir l'étanchéité entre le compartiment hydraulique et le compartiment électronique, il a également été proposé, selon le document US 5 911 248 de rassembler les câbles à protéger en un faisceau de câbles parallèles ou torsadés, et d'entourer ce faisceau d'une enveloppe tubulaire souple puis d'un manchon de métal de nature à comprimer cette enveloppe pour empêcher tout passage de vapeurs de carburant à la périphérie des câbles.

Un tel dispositif rend toutefois toute intervention de maintenance particulièrement incommode dans la mesure où tous les câbles électriques doivent être démontés à leur deux extrémités pour en changer un seul.

Il a également déjà été proposé conformément au document EP 1 333 007 d'équiper un distributeur de carburant d'un dispositif formant barrière de protection anti-explosion constitué par deux joints réalisés en un matériau compressible et montés l'un contre l'autre en enserrant une rangée de câbles.

Le nombre de câbles pouvant être insérés entre ces deux joints est toutefois limité par la largeur totale disponible, et par la nécessité de laisser un certain espacement entre deux câbles pour garantir l'étanchéité.

De plus, un tel dispositif formant barrière de protection anti-explosion ne permet que d'obtenir une étanchéité de niveau IP 23, ce qui peut dans certains cas s'avérer insuffisant, dans la mesure où la compression des câbles entre les deux joints ne permet pas d'exclure totalement qu'il subsiste à leur périphérie des interstices entraînant des risques de fuites.

La présente invention a pour objet de remédier à ces inconvénients en proposant un distributeur de carburant du type susmentionné équipé d'un dispositif formant barrière de protection anti-explosion permettant le passage d'un très grand nombre de câbles, tout en garantissant une sécurité anti-explosion renforcée.

La présente invention a de surcroît pour objet de proposer in distributeur de carburant du type susmentionné équipé d'un dispositif de protection anti-explosion permettant de supprimer ou d'ajouter un câble, ou de remplacer un câble par un autre câble ayant un plus grand ou un plus petit diamètre, ce de façon particulièrement facile et rapide.

Conformément à l'invention, un tel distributeur de carburant est caractérisé en ce que le dispositif formant barrière de protection anti-explosion est constitué par un joint d'étanchéité monobloc de forme essentiellement parallélépipédique réalisé en un matériau compressible et s'étendant essentiellement horizontalement sur la totalité de la largeur du distributeur.

Ce joint d'étanchéité monobloc comporte une face supérieure, une face inférieure ainsi que quatre faces de jonction, à savoir deux faces de jonction latérales, une face de jonction longitudinale arrière par laquelle il est fixé à une paroi essentiellement verticale du distributeur et une face de jonction longitudinale avant libre.

Il est par ailleurs équipé d'une série de perçages circulaires le traversant de part en part dans le sens de la hauteur qui sont réalisés par la technique d'usinage au couteau.

Chacun de ces perçages coopère avec une fente associée pratiquée entre celui-ci et la face de jonction longitudinale avant, sur la totalité de la hauteur du joint.

Au moins l'un des perçages circulaires traversants est dégagé de manière à définir une ouverture dans laquelle est inséré un câble de diamètre un peu supérieur.

Les perçages non équipés de câbles demeurent fermés, sans enlèvement de matière, ce qui leur permet de rester étanches.

Le caractère monobloc du joint d'étanchéité équipant le distributeur de carburant conforme à l'invention est particulièrement avantagé dans la mesure où ce joint peut être fixé sur une paroi verticale par une seule de ses faces, permettant ainsi de réduire dans une large mesure les coûts en matériaux et fixations, par rapport à un dispositif pluri-éléments.

Un autre avantage essentiel de ce joint d'étanchéité est lié au fait que les perçages circulaires pratiqués dans celui-ci ont un diamètre inférieur au diamètre des câbles qui y sont insérés, permettant ainsi de garantir une compression de ces câbles dans leur ouverture spécifique de nature à éviter que ne subsiste à leur périphérie des interstices pouvant être sources de fuites.

Il est bien entendu à cet effet impératif que le joint d'étanchéité soit réalisé en un matériau compressible.

Lorsque un opérateur effectuant le câblage électrique du distributeur de carburant positionne un câble dans le joint d'étanchéité, il doit préalablement dégager l'ouverture dans laquelle il souhaite insérer ce câble en évacuant le tronçon cylindrique de matière situé à la partie interne du perçage circulaire.

Il peut ensuite introduire ce câble dans la fente associée à l'ouverture ainsi dégagée qui se déforme avant de revenir élastiquement dans sa position initiale dans laquelle ses bords sont en appui l'un contre l'autre dès que le câble est inséré dans l'ouverture circulaire.

Lors de cette insertion l'ouverture pratiquée dans le joint d'étanchéité peut s'agrandir, du fait du caractère compressible du matériau dans lequel est réalisé ce point, puis se rétracter élastiquement autour de ce dernier pour éviter que ne subsiste à sa périphérie des interstices pouvant être sources de fuites.

Le choix d'un matériau compressible adéquat tel que le chloroprène (C₄H₅Cl) permet d'obtenir ainsi une étanchéité à l'eau et aux vapeurs d'hydrocarbures de niveau IP 54.

Un autre avantage du distributeur de carburant conforme à l'invention est lié au fait que la présence des fentes pratiquées entre les perçages et la face de jonction longitudinale avant du joint d'étanchéité monobloc permet de faciliter dans une large mesure le montage et le démontage des câbles électriques.

Ce montage et ce démontage sont en effet ainsi considérablement facilités par rapport à des joints sans fentes dans lesquels il est nécessaire de faire passer les câbles par des ouvertures traversantes, ou à des joints pluri-éléments dans lesquels il est nécessaire de maintenir les câbles contre un premier élément du joint puis de positionner le second élément avant de réaliser la fixation.

Selon une caractéristique préférentielle de l'invention, les perçages circulaires traversants équipant le joint d'étanchéité monobloc ont des diamètres différents de façon à pouvoir s'adapter à différents diamètres de câbles.

Ces perçages circulaires traversants peuvent de plus avantageusement être répartis sur au moins deux rangées et disposés en quinconce.

Cette caractéristique permet d'augmenter le nombre possible de passages de câbles tout en conservant un encombrement minimum.

Le joint d'étanchéité monobloc peut ainsi être constitué par une pièce standard pouvant être utilisée pour différentes configurations de distributeur.

L'invention s'applique avantageusement à un distributeur de carburant dont le châssis/la structure métallique comporte une paroi latérale de montage essentiellement verticale.

Le compartiment hydraulique et/ou le compartiment électronique peuvent en particulier être fixés solidairement à cette paroi latérale de montage verticale.

Le distributeur de carburant peut en outre comporter un compartiment de rangement de tuyaux flexibles équipés de pistolets distributeurs qui est muni de cette paroi latérale de montage verticale.

Selon l'invention, un tel distributeur de carburant est caractérisé en ce que le joint d'étanchéité monobloc est fixé sur la paroi latérale de montage notamment collé sur cette paroi, à la partie inférieure du compartiment électronique.

Il est essentiel que ce joint d'étanchéité occupe toute la largeur du distributeur et ne laisse subsister aucun espace vide entre celui-ci et les parois frontales de cet appareil.

Selon l'invention, les équipements du compartiment électronique sont avantageusement eux aussi fixés sur la paroi latérale de montage.

Selon une autre caractéristique de l'invention le compartiment hydraulique et le compartiment électronique du distributeur de carburant sont séparés par une barrière vapeur et par une barrière de ventilation.

La présence de ces barrières est en fait imposée par les normes et réglementations en vigueur.

La barrière vapeur consiste en règle générale en un espace vide de plusieurs centimètres de hauteur dont les parois latérales sont fermées.

La barrière de ventilation consiste quant à elle en règle générale en un espace vide dont les parois latérales sont parsemées d'ouvertures de façon à permettre le passage de l'air extérieur et l'évacuation d'éventuelles vapeurs de carburant.

Une plaque de séparation horizontale équipée d'une ouverture de passage des câbles peut en outre avantageusement être montée entre les barrières vapeur et de ventilation et le compartiment électronique, au dessous du joint d'étanchéité monobloc.

Le distributeur de carburant peut également le cas échéant être équipé d'un support de compression monté sur la plaque de séparation pour maintenir et comprimer le joint d'étanchéité contre la paroi latérale de montage.

Selon une autre caractéristique préférentielle de l'invention, la structure du compartiment électronique et le cas échéant la barrière vapeur et la barrière de ventilation comporte(nt) une paroi de fixation évidée et équipée de replats muni d'orifices de positionnement permettant sa (leur) fixation directement sur la paroi latérale de montage.

Les barrières vapeur et de ventilation ont ainsi une structure essentiellement en forme de U.

Une telle configuration est de nature à faciliter dans une large mesure le montage du distributeur de carburant conforme à l'invention.

L'invention concerne également un tel procédé de montage simplifié.

La première étape de ce procédé consiste à monter la paroi latérale de montage ainsi que la structure du compartiment hydraulique et les équipements de ce compartiments de façon connue en elle-même.

La seconde étape de ce procédé consiste à fixer directement les équipements du compartiment électronique (indépendamment de la structure de ce compartiment) ainsi que la face de jonction longitudinale arrière du joint d'étanchéité monobloc sur la paroi latérale de montage.

L'opérateur peut ensuite effectuer le câblage électrique qui consiste à relier par des câbles les équipements du compartiment hydraulique et les équipements du compartiment électronique en connectant les extrémités libres de chaque câble à l'emplacement correspondant.

Lors de cette opération, chaque câble est inséré dans une ouverture adaptée du joint d'étanchéité monobloc, ayant un diamètre adéquat pour garantir l'étanchéité aux vapeurs de carburant recherchée.

L'étape suivante du procédé de montage conforme à l'invention consiste à fixer la barrière vapeur et la barrière de ventilation ainsi que la plaque de séparation horizontale entre elles, sur la structure du compartiment hydraulique et sur la paroi de montage.

Ce montage est facilité par la configuration essentiellement en forme de U des barrières vapeur et de ventilation.

Le support de compression peut alors être le cas échéant monté sur la plaque de séparation horizontale.

L'étape finale de ce procédé consiste à fixer la structure du compartiment électronique sur la paroi de montage et sur la barrière de ventilation.

Un tel procédé présente l'avantage de pouvoir être mis en oeuvre par un opérateur unique, ce sans aucune étape complexe, permettant ainsi de réduire dans une large mesure le temps de montage ainsi que les coûts en matériaux.

En particulier, la fixation de la face de jonction longitudinale arrière du joint d'étanchéité sur la paroi latérale de montage est remarquablement simple et rapide et chaque câble peut ensuite être très facilement inséré dans ce joint.

Ce procédé simplifié qui est conditionné par la structure particulière du joint d'étanchéité monobloc présente de surcroît l'avantage de permettre un montage et un démontage aisé de chacun des câbles électriques, indépendamment des autres, sans avoir à intervenir sur d'autres équipements du distributeur de carburant.

Il est a noter qu'un tel procédé de montage permet de remplacer une structure d'un compartiment électronique (et les barrières vapeur et de ventilation associées) de dimensions données par une structure de plus grandes dimensions, comprenant par exemple un écran supplémentaire pour l'affichage de publicité.

Aucune intervention sur les équipements électroniques internes de ce compartiment ou sur le câblage électrique n'a alors à être effectuée dans la mesure où ces éléments sont montés indépendamment de la structure du compartiment électronique.

Les caractéristiques du distributeur de carburant ainsi que du procédé de montage qui font l'objet de l'invention seront décrites plus en détail en se référant aux dessins non limitatifs annexés dans lesquels :
La figure 1 est une vue en perspective représentant un distributeur de carburant conforme à l'invention.
La figure 2 est un schéma illustratif de la partie interne du compartiment hydraulique et du compartiment électronique.
La figure 3 est un schéma illustratif des premières étapes de montage de ce distributeur.
Les figures 4a et 4b sont respectivement des vues de dessus et en perspective d'un joint d'étanchéité monobloc.
La figure 5 est une vue de dessus représentant une variante d'un tel joint.
Les figures 6a et 6b sont respectivement des vues de dessus et en perspective illustrant la première étape de la mise en place d'un câble dans un tel joint.
Les figures 7a et 7b sont respectivement des vues de dessus et en perspective illustrant de la seconde étape de la mise d'un câble dans un tel joint.
La figure 8 est un schéma illustrant une étape ultérieure du procédé de montage.
La figure 9 est une vue en perspective d'un détail du distributeur représentant la plaque de séparation horizontale et le support de compression.
La figure 10 est une vue « éclatée » représentant la barrière vapeur, la barrière de ventilation ainsi que la structure du compartiment électronique.

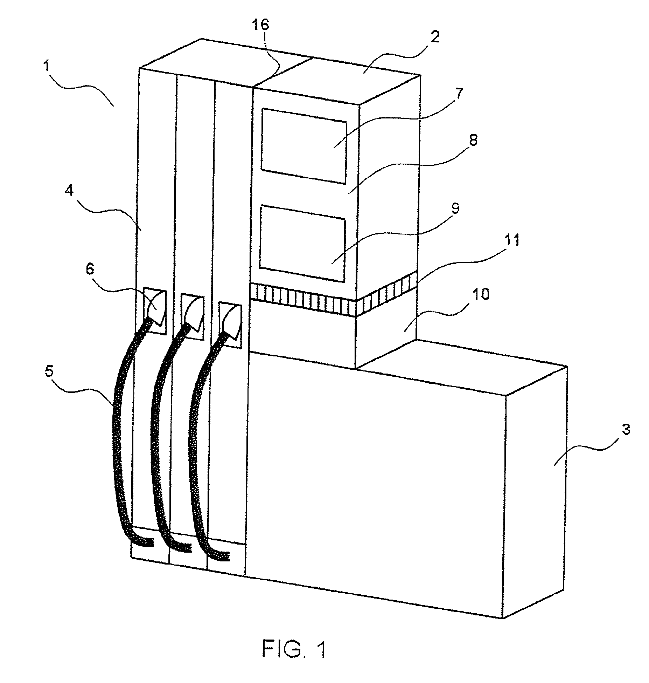

Selon la figure 1 l'appareil distributeur comporte un compartiment inférieur ou compartiment hydraulique 3, un compartiment supérieur ou compartiment électronique ainsi qu'un compartiment 4 de rangement de tuyaux flexibles 5 équipé de pistolets distributeurs 6.

Le compartiment de rangement des tuyaux flexibles 4 est muni d'une paroi de montage verticale 16 sur laquelle sont fixés le compartiment hydraulique 3 et le compartiment électronique 2.

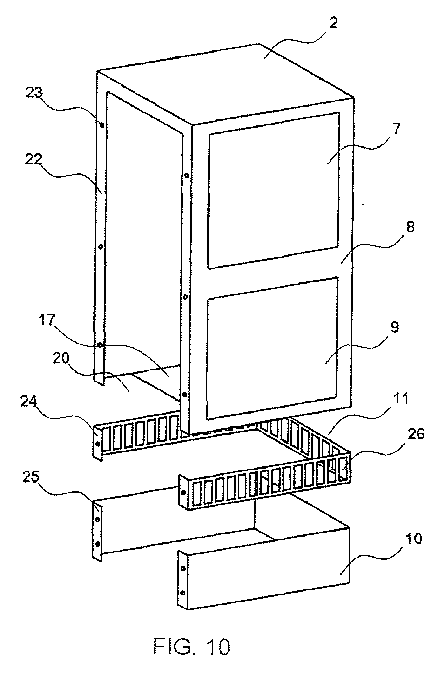

Le compartiment hydraulique 3 et le compartiment électronique 2 sont séparés par une barrière vapeur 10 consistant en un espace vide aux parois latérales fermées, surmontée par une barrière de ventilation 11 consistant en un espace vide dont les parois latérales sont équipées d'ouvertures de ventilation 26 qui sont représentées plus précisément sur la figure 10.

Le compartiment électronique 2 comporte un panneau latéral avant 8 équipé de moyens d'affichage 7 ainsi que de moyens de paiement ou d'affichage complémentaire 9.

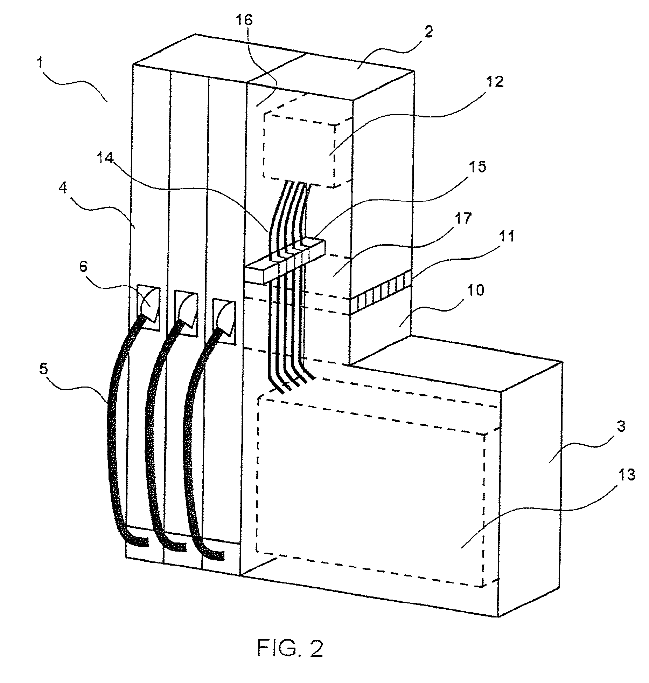

Selon la figure 2, le compartiment hydraulique 3 est équipé à sa partie interne d'équipements 13 qui sont reliés à des équipements 12 du compartiment électronique 2 par un ensemble de câbles 14.

Un joint d'étanchéité monobloc 15 de forme parallélépipédique réalisé en un matériau compressible est monté au niveau du passage des câbles 14 entre la barrière vapeur 10 et la barrière de ventilation 11 surmontant le compartiment hydraulique 3 et le compartiment électronique 2.

Ce joint d'étanchéité 15 a pour fonction d'empêcher que les vapeurs de carburant s'évaporant dans le compartiment hydraulique 3 puissent remonter dans le compartiment électronique 2.

Il comporte une face supérieure, une face inférieure ainsi que quatre faces de jonction, à savoir deux faces de jonction latérales, une face de jonction longitudinale arrière et une face de jonction longitudinale avant.

Le joint d'étanchéité 15 est plus précisément fixé sur la paroi latérale de montage 16 du compartiment de rangement des tuyaux flexibles 4 par sa face de jonction longitudinale arrière et s'étend sur la totalité de la largeur du distributeur 1.

Une plaque de séparation horizontale 17 est montée au dessus de la barrière de ventilation 11.

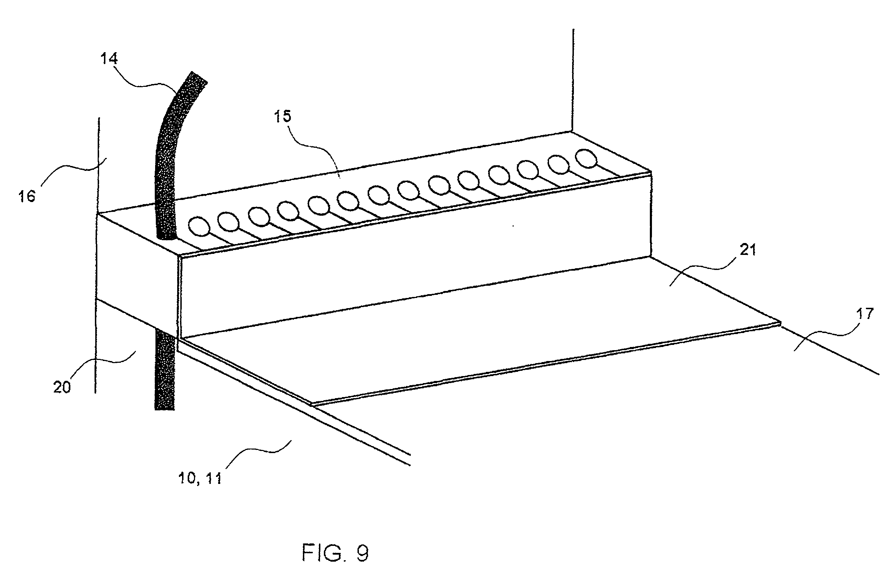

Selon la figure 9 cette plaque 17 permet de séparer hermétiquement le compartiment hydraulique 3 et le compartiment électronique 2 en ne conservant qu'un espace vide 20 pour le passage des câbles 14 dans le joint d'étanchéité 15.

Un support de compression 21 du point d'étanchéité 15 contre la paroi de montage 16 est fixé à la plaque de séparation horizontale 17.

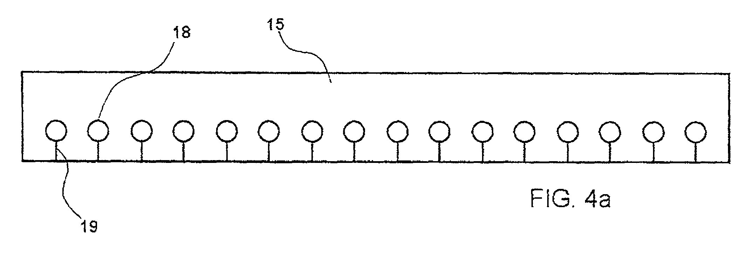

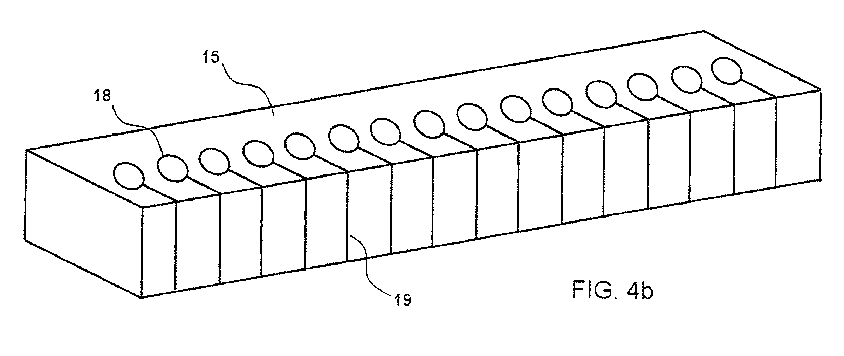

Selon les figures 4a et 4b le joint d'étanchéité 15 est équipé d'une série de perçages circulaires 18 réalisés par la technique d'usinage au couteau qui le traversent de part en part dans le sens de la hauteur.

Chacun des perçages circulaires 18 coopère avec une fente 19 associée qui s'étend jusqu'à la face de jonction longitudinale avant du joint d'étanchéité 15, sur toute la hauteur de ce joint.

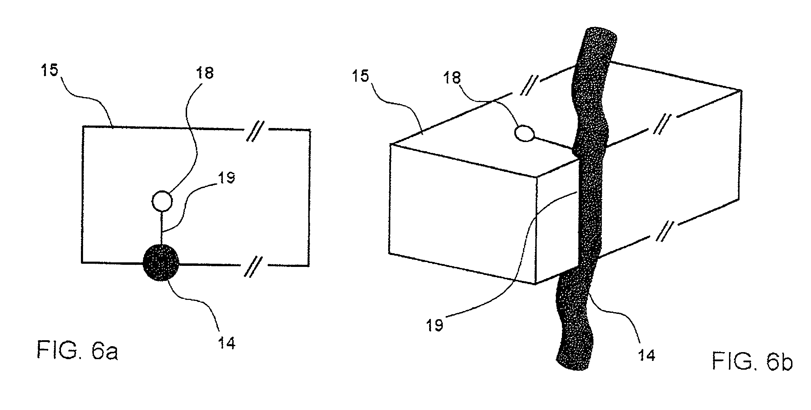

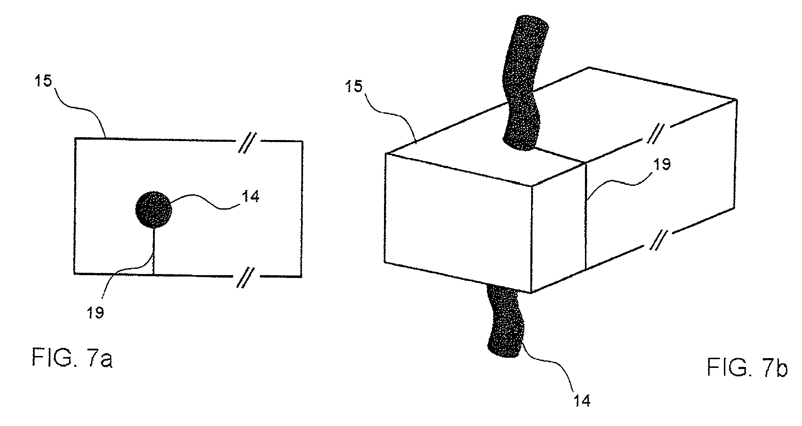

Après dégagement des ouvertures délimitées par les perçages circulaires 18, des câbles 14 de diamètre adapté peuvent ainsi être insérés dans des fentes 19 puis poussés dans celles-ci jusqu'à ces ouvertures comme représenté plus en détail sur les figures 6a, 6b, 7a et 7b.

Ces câbles 14 doivent avoir un diamètre un peu supérieur à celui de l'ouverture dans laquelle ils sont introduits pour être comprimés dans cette ouverture qui peut ainsi épouser parfaitement leur contour de façon à garantir une parfaite étanchéité, compte tenu du retour élastique des fentes 19 dans leur position initiale dans laquelle leurs bords sont en appui l'un contre l'autre.

Selon les figures 4a et 4b les perçages circulaires 18 sont répartis sur une seule rangée et ont tous des diamètres similaires.

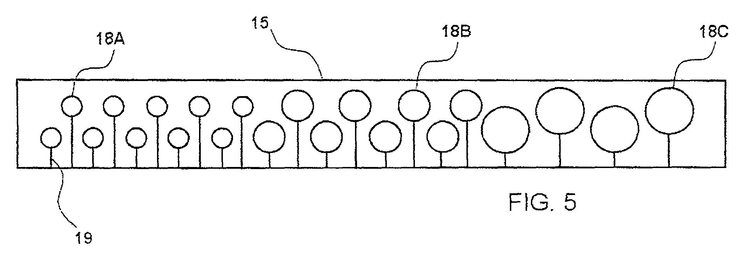

Selon la figure 5, les perçages circulaires 18A, 18B et 18C sont disposés en quinconce sur deux rangées et ont des diamètres différents de façon à pouvoir s'adapter à des câbles 14 de différents diamètres.

Le montage du distributeur 1 s'effectue de la façon suivante :

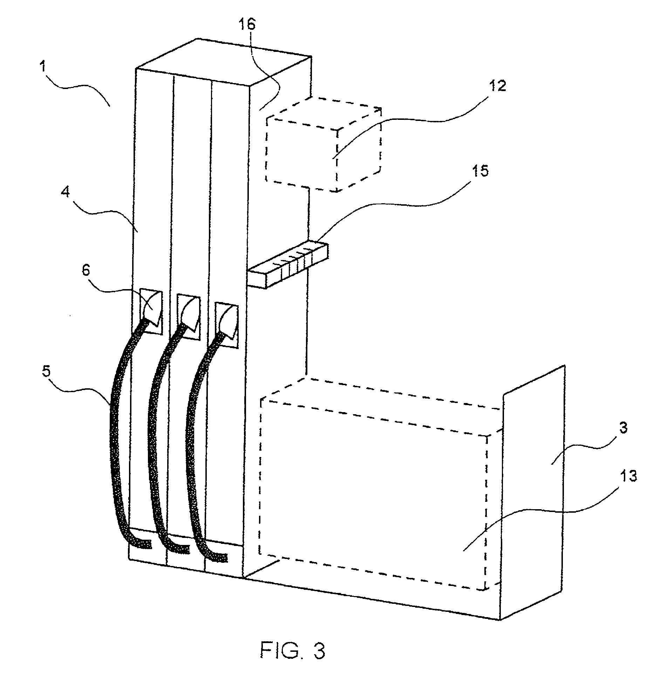

Selon la figure 3, la première étape de ce montage consiste à monter le compartiment de rangement des tuyaux flexibles 4 ainsi que la structure du compartiment hydraulique 3 et les équipements hydrauliques 13 de ce compartiment de façon connue en elle-même.

Les équipements 12 du compartiment électronique 2 (indépendamment de la structure de ce compartiment) ainsi que le joint d'étanchéité monobloc 15 peuvent ensuite être directement fixés sur la paroi latérale de montage 16 du compartiment de rangement des tuyaux flexibles 4.

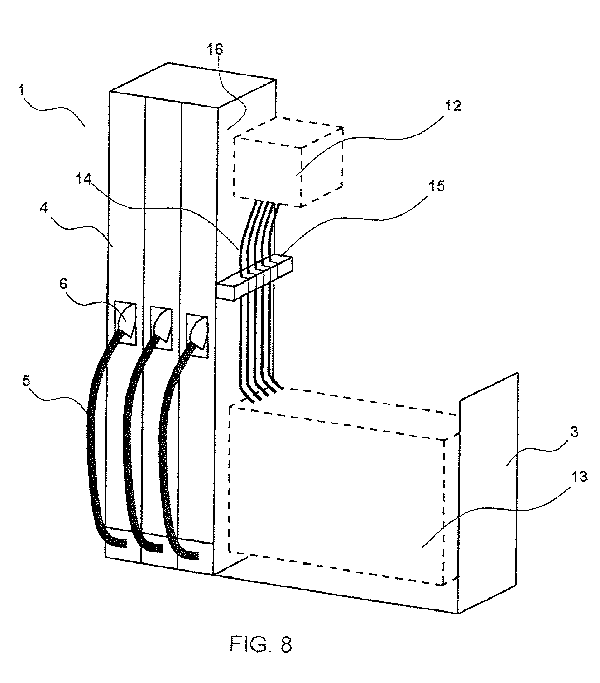

L'étape de montage suivante consiste à effectuer le câblage électrique de façon à relier par des câbles 14 les équipements 13 du compartiment hydraulique 3 et les équipement 12 du compartiment électronique comme représenté sur la figure 8.

Lors de ce câblage, l'opérateur introduit chacun des câbles 14 dans une fente 19 associée à une ouverture 18 ayant un diamètre adapté qui a été préalablement dégagée comme représenté sur les figures 6a et 6b, puis pousse ce câble 14 dans cette fente 19 jusqu'à ce qu'il soit inséré dans l'ouverture 18 comme représenté sur les figures 7a et 7b.

A partir de la position câblée représentée sur la figure 8, la suite du montage consiste à fixer la barrière vapeur 10 et la barrière de ventilation 11 ainsi que la plaque de séparation horizontale 17 entre elles, sur la structure du compartiment hydraulique 3 et sur la paroi de montage 16 du compartiment de rangement des tuyaux flexibles 4.

Selon la figure t0, la barrière vapeur 10 ainsi que la barrière de ventilation 11 sont constituées par des éléments essentiellement en forme de U dont la paroi latérale vide comporte des replats 25, 24 équipés d'orifices de positionnement permettant leur fixation au moyen de vis non représentées sur la paroi de montage 16 du compartiment de rangement des tuyaux flexibles 4.

Selon la figure 9, le support de compression 21 du joint d'étanchéité 15 contre la paroi de montage 16 du compartiment de rangement des tuyaux flexibles 4 est ensuite fixé à la plaque de séparation horizontale 17.

Cette fixation ayant été effectuée, la dernière étape du procédé de montage du distributeur 1 consiste à fixer la structure du compartiment électronique 2 sur la paroi de montage 16 du compartiment de rangement des tuyaux flexibles 4 et sur la barrière de ventilation 11.

Selon la figure 10, cette structure 2 comporte à cet effet des parois frontales et une paroi latérale pleine ainsi qu'une paroi latérale évidée comportant des replats 22 équipés d'orifices de positionnement 23 permettant sa fixation au moyen de vis non représentées sur la paroi latérale de montage 16 du compartiment de rangement des tuyaux flexibles 4.

### NOMENCLATURE

- 1: Distributeur
- 2: Compartiment électronique
- 3: Compartiment hydraulique
- 4: Compartiment de rangement des tuyaux flexibles
- 5: Tuyau flexible
- 6: Pistolet distributeur
- 7: Moyen d'affichage
- 8: Panneau latéral avant
- 9: Moyen de paiement et/ou moyen d'affichage complémentaire
- 10: Barrière vapeur
- 11: Barrière de ventilation
- 12: Equipements du compartiment électrique
- 13: Equipements du compartiment hydraulique
- 14: Câbles
- 15: Joint d'étanchéité monobloc
- 16: Paroi de montage
- 17: Plaque de séparation horizontale
- 18: Perçages circulaires traversants
- 19: Fente
- 20: Espace vide
- 21: Support de compression
- 22: Replats
- 23: Orifices de positionnement
- 24: Replats
- 25: Replats
- 26: Ouvertures de ventilation

## Revendications

1. Distributeur de carburant (1) comportant un compartiment inférieur ou compartiment hydraulique (3) et un compartiment supérieur ou compartiment électronique (2) dont les équipements sont reliés par des câbles (14), un dispositif formant barrière de protection anti-explosion étant monté au niveau du passage de ces câbles (14) entre le compartiment hydraulique (3) et le compartiment électronique (2) de façon à empêcher que les vapeurs de carburant s'évaporant dans le compartiment hydraulique (3) puissent remonter dans le compartiment électronique (2),
**caractérisé en ce que**
le dispositif formant barrière de protection anti-explosion est constitué par un joint d'étanchéité monobloc (15) de forme essentiellement parallélépipédique réalisé en un matériau compressible et s'étendant essentiellement horizontalement sur la totalité de la largeur du distributeur (1), ce joint d'étanchéité monobloc (15) comportant une face supérieure, une face inférieure ainsi que quatre faces de jonction, à savoir deux faces de jonction latérales, une face de jonction longitudinale arrière par laquelle il est fixé à une paroi essentiellement verticale (16) du distributeur, et une face de jonction longitudinale avant libre, et étant équipé d'une série de perçages circulaires (18) le traversant de part en part dans le sens de la hauteur, réalisés par la technique d'usinage au couteau et coopérant chacun avec une fente (19) associée pratiquée entre ce perçage (18) et la face de jonction longitudinale avant, sur la totalité de la hauteur du joint (15), au moins l'un des perçages circulaires traversants (18) étant dégagé de manière à définir une ouverture dans laquelle est inséré un câble (14) de diamètre un peu supérieur.

2. Distributeur de carburant selon la revendication 1,
**caractérisé en ce que**
le joint d'étanchéité monobloc (15) est équipé de perçages circulaires traversants (18) ayant des diamètres différents.

3. Distributeur de carburant selon l'une quelconque des revendications 1 et 2,
**caractérisé en ce que**
les perçages circulaires traversants (18) sont répartis sur au moins deux rangées et disposés en quinconce.

4. Distributeur de carburant (1) selon l'une quelconque des revendications 1 à 3 comportant une paroi latérale de montage (16) essentiellement verticale sur laquelle sont notamment fixés le compartiment hydraulique (3) et le compartiment électronique (2),
**caractérisé en ce que**
le joint d'étanchéité monobloc (15) est fixé sur la paroi latérale de montage (16), notamment collé sur cette paroi, à la partie inférieure du compartiment électronique (2).

5. Distributeur de carburant selon la revendication 4,
**caractérisé en ce que**
les équipements du compartiment électronique (2) sont directement fixés sur la paroi latérale de montage (16).

6. Distributeur de carburant selon l'une quelconque des revendications 1 à 5,
**caractérisé en ce que**
le compartiment hydraulique (3) et le compartiment électronique (2) sont séparés par une barrière vapeur (10) et par une barrière de ventilation (11).

7. Distributeur de carburant selon la revendication 6,
**caractérisé en ce qu'**
il comporte une plaque de séparation horizontale (17) montée entre les barrières vapeur (10) et de ventilation (11)et le compartiment électronique (2), au dessous du joint d'étanchéité monobloc (15), et équipée d'une ouverture de passage (20) des câbles (14), ainsi que le cas échéant, un support de compression (21) monté sur cette plaque de séparation (17) pour maintenir et comprimer le joint d'étanchéité monobloc (15) contre la paroi latérale de montage (16).

8. Distributeur de carburant selon l'une quelconque des revendications 4 à 7,
**caractérisé en ce que**
la structure du compartiment électronique (2) et le cas échéant la barrière vapeur (10) et la barrière de ventilation (11) comportent une paroi de fixation évidée et équipée de replats (22, 24, 25) munis d'orifice de positionnement (23) permettant sa (leur) fixation directement sur la paroi latérale de montage (16).

9. Procédé de montage du distributeur (1) de carburant selon les revendications 4 à 8,
**caractérisé par** les étapes suivantes :
- on monte la structure du compartiment hydraulique (3) et les équipements (13) de ce compartiment ainsi que la paroi latérale de montage (16) de façon connue en elle-même,
- on fixe directement les équipements (12) du compartiment électronique (2) et le joint d'étanchéité monobloc (15) sur la paroi latérale de montage (16),
- on effectue le câblage électrique en reliant par des câbles (14) les équipements (13) du compartiment hydraulique (3) et les équipements (12) du compartiment électronique (2) en insérant ces câbles (14) dans une ouverture associée (18) du joint d'étanchéité monobloc (15),
- on fixe la barrière vapeur (10) et la barrière de ventilation (11) ainsi que la plaque de séparation horizontale (17) entre elles, sur la structure du compartiment hydraulique (3) et sur la paroi de montage (16),
- le cas échéant, on monte le support de compression (21) sur la plaque de séparation horizontale (17), et
- on fixe la structure du compartiment électronique (2) sur la paroi de montage (16) et sur la barrière de ventilation (11).

## Claims

1. A fuel dispenser (1) comprising a lower compartment or hydraulic compartment (3) and an upper compartment or electronic compartment (2) whose components are connected by cables (14), a device forming an explosion-inhibiting protection barrier being mounted at the location at which said cables (14) pass between the hydraulic compartment (3) and the electronic compartment (2) so as to prevent the fuel vapours evaporating in the hydraulic compartment (3) from rising into the electronic compartment (2), **characterized in that** the device forming an explosion-inhibiting protection barrier is formed by a one-piece sealing joint (15) of substantially parallelepipedic shape made from a compressible material and extending substantially horizontally over the entire width of the dispenser (1), said one-piece sealing joint (15) comprising an upper surface, a lower surface and four junction surfaces, namely two lateral junction surfaces, a rear longitudinal junction surface by means of which it is secured to a substantially vertical wall (16) of the dispenser, and a free front longitudinal junction surface, and being provided with a series of circular holes (18) passing through it and arranged vertically, obtained by blade machining and each cooperating with an associated slot (19) provided between said hole (18) and the front longitudinal junction surface, over the entire height of the joint (15), at least one of the circular through holes (18) being open so as to form an opening into which a cable (14) of slightly greater diameter is inserted.

2. A fuel dispenser according to claim 1, **characterized in that** the one-piece sealing joint (15) is provided with circular through holes (18) of different diameter.

3. A fuel dispenser according to any one of claims 1 and 2, **characterized in that** the circular through holes (18) are arranged in at least two rows in a staggered manner.

4. A fuel dispenser (1) according to any one of claims 1 to 3, comprising a substantially vertical lateral assembly wall (16) on which the hydraulic compartment (2) and the electronic compartment (3) are in particular secured, **characterized in that** the one-piece sealing joint (15) is secured to the lateral assembly wall (16), and in particular adhered to said wall, in the lower portion of the electronic compartment (2).

5. A fuel dispenser according to claim 4, **characterized in that** the components of the electronic compartment (2) are secured directly to the lateral assembly wall (16).

6. A fuel dispenser according to any one of claims 1 to 5, **characterized in that** the hydraulic compartment (3) and the electronic compartment (2) are separated by a vapour barrier (10) and by a ventilation barrier (11).

7. A fuel dispenser according to claim 6, **characterized in that** it comprises a horizontal separation plate (17) mounted between the vapour and ventilation barriers (10, 11) and the electronic compartment (2), below the one-piece sealing joint (15), and fitted with an opening (20) for the passage of cables (14) and, where necessary, with a compression support (21) mounted on said separation plate (17) in order to hold and compress the one-piece sealing joint (15) against the lateral assembly wall (16).

8. A fuel dispenser according to any one of claims 4 to 7, **characterized in that** the structure of the electronic compartment (2) and, where necessary, the vapour barrier (10) and the ventilation barrier (11) comprise a recessed fastening wall fitted with flanges (22, 24, 25) provided with a positioning hole (23) enabling them to be secured directly to the lateral assembly wall (16).

9. A method of installation of a fuel dispenser (1) according to claims 4 to 8, **characterized by** the following stages:
- the structure of the hydraulic compartment (3) and the components (13) of said compartment and the lateral assembly wall (16) are installed in a manner known per se;
- the components (12) of the electronic compartment (2) and the one-piece sealing joint (15) are secured directly to the lateral assembly wall (16);
- the electric cabling is carried out by connecting, by cables (14), the components (13) of the hydraulic compartment (3) and the components (12) of the electronic compartment (2) by inserting said cables (14) into an associated opening (18) of the one-piece sealing joint (15);
- the vapour barrier (10) and the ventilation barrier (11), as well as the horizontal separation plate (17) between them, are secured on the structure of the hydraulic compartment (3) and on the assembly wall (16);
- where necessary, the compression support (21) is mounted on the horizontal separation plate (17);
- the structure of the electronic compartment (2) is secured on the assembly wall (16) and on the ventilation barrier (11).

## Patentansprüche

1. Kraftstoffzapfanlage (1) mit einem unteren Raum, bzw. Hydraulikraum (3) und einem oberen Raum, bzw. Elektronikraum (2), deren Ausrüstungen durch Kabel (14) verbunden sind, wobei eine eine explosionshemmende Schranke bildende Vorrichtung bei den Kabel-(14)-Durchführungen zwischen Hydraulikraum (3) und Elektronikraum (2) derart angebaut ist, dass verhindert wird, dass im Hydraulikraum (3) verdunstende Kraftstoffdämpfe in den Elektronikraum (2) aufsteigen können,
**dadurch gekennzeichnet, dass**
die eine explosionshemmende Schranke bildende Vorrichtung aus einer im wesentlichen quaderförmigen, aus einem verdichtbaren material hergestellten und im wesentlichen horizontal über die ganze Breite der Kraftstoffzapfanlage (1) verlaufenden Einblockdichtung (15) besteht, wobei diese Einblockdichtung (15) eine obere Fläche, eine untere Fläche sowie vier Anschlussflächen aufweist, und zwar zwei seitliche Anschlussflächen, eine hintere Längsanschlussfläche, an der sie an eine im wesentlichen senkrechte Wand (16) der Kraftstoffzapfanlage befestigt ist, und eine vordere freie Längsanschlussfläche, und mit einer Reihe kreisförmiger Bohrungen (18) versehen ist, die sie in vertikaler Richtung durchqueren, mit der Messerbearbeitungstechnik ausgeführt sind und jeweils mit einem entsprechenden Spalt (19) zusammenwirken, der zwischen der betroffenen Bohrung (18) und der vorderen Längsanschlussfläche über die ganze Höhe der Dichtung (15) verläuft, wobei mindestens eine der kreisförmigen Durchgangsbohrungen (18) frei ist, so dass sie eine Öffnung definiert, in welcher ein Kabel (14) mit einem geringfügig größeren Durchmesser eingelegt ist.

2. Kraftstoffzapfanlage nach Anspruch 1,
**dadurch gekennzeichnet, dass**
die Einblockdichtung (15) mit kreisförmigen Durchgangsbohrungen (18) verschiedener Durchmesser versehen ist.

3. Kraftstoffzapfanlage nach einem der Ansprüche 1 und 2,
**dadurch gekennzeichnet, dass**
die kreisförmigen Durchgangsbohrungen (18) in mindestens zwei Reihen und versetzt angeordnet verteilt sind.

4. Kraftstoffzapfanlage nach einem der Ansprüche 1 bis 3 mit einer seitlichen im wesentlichen senkrechten Montagewand (16), auf welcher insbesondere der Hydraulikraum (3) und der Elektronikraum (2) befestigt sind,
**dadurch gekennzeichnet, dass**
die Einblockdichtung (15) auf die seitliche Montagewand (16) an den unteren Teil des Elektronikraums (2) befestigt ist, insbesondere an diese Wand geklebt ist.

5. Kraftstoffzapfanlage nach Anspruch 4,
**dadurch gekennzeichnet, dass**
die Ausrüstungen des Elektronikraums (2) unmittelbar an die seitliche Montagewand (16) befestigt sind.

6. Kraftstoffzapfanlage nach einem der Ansprüche 1 bis 5,
**dadurch gekennzeichnet, dass**
der Hydraulikraum (3) und der Elektronikraum (2) durch eine Dampfsperre (10) und durch eine Lüftungssperre (11) getrennt sind.

7. Kraftstoffzapfanlage nach Anspruch 6,
**dadurch gekennzeichnet, dass**
sie eine waagerechte Trennplatte (17) aufweist, die zwischen den Dampf- (10) und Lüftungssperren (11) und dem Elektronikraum (2) unter der Einblockdichtung (15) montiert ist, und eine Durchgangsöffnung (20) für die Kabel (14), sowie gegebenenfalls einen auf diese Trennplatte (17) montierten Druckhalter (21) aufweist, um die Einblockdichtung (15) gegen die seitlichen Montagewand (16) zu halten und sie zusammen zu drücken.

8. Kraftstoffzapfanlage nach einem der Ansprüche 4 bis 7,
**dadurch gekennzeichnet, dass**
die Struktur des Elektronikraums (2) und gegebenenfalls die Dampfsperre (10) und die Lüftungssperre (11) eine ausgehöhlte mit Abflachungen (22, 24, 25) - die selbst mit Positionierungsöffnungen versehen sind - versehene Befestigungswand aufweisen, wobei die Positionierungsöffnungen ihre Befestigung unmittelbar an die seitliche Montagewand (16) gestatten.

9. Montageverfahren der Kraftstoffzapfanlage (1) nach den Ansprüchen 4 bis 8,
**gekennzeichnet durch** folgende Schritte:
- man montiert in der an sich bekannten Weise die Struktur des Hydraulikraums (3) und die Ausrüstungen (13) dieses Raumes sowie die seitliche Montagewand (16);
- man befestigt die Ausrüstungen (12) des Elektronikraums (2) und die Einblockdichtung (15) unmittelbar an die seitliche Montagewand (16);
- man stellt die elektrische Verkabelung her, indem man durch Kabel (14) die Ausrüstungen (13) des Hydraulikraums (3) und die Ausrüstungen (12) des Elektronikraums (2) verbindet, wobei diese Kabel (14) in eine entsprechende Öffnung (18) der Einblockdichtung (15) eingefügt werden;
- man befestigt untereinander die Dampfsperre (10) und die Lüftungssperre (11) sowie die waagerechte Trennplatte (17) an die Struktur des Hydraulikraums (3) und an die Montagewand (16);
- gegebenenfalls montiert man den Druckhalter (21) an die waagerechte Trennplatte (17); und
- man befestigt die Struktur des Elektronikraums (2) an die Montagewand (16) und an die Lüftungssperre (11).
